# FASCICULE DE BREVET EUROPEEN

(11) **EP 2 457 885 B1**
(45) Date de publication et mention de la délivrance du brevet: **01.05.2013**
(21) Numéro de dépôt: 11190685.5
(22) Date de dépôt: 25.11.2011
(51) Int. Cl.: C04B 35/83

(54) **Procédé de réalisation d'une préforme fibreuse tridimensionnelle pour la fabrication d'une pièce annulaire en matériau composite carbone-carbone**
Verfahren zur Herstellung eines dreidimensionalen faserigen Vorformlings zur Herstellung eines ringförmigen Werkstücks aus Karbon-/Karbon-Verbundwerkstoff
Method for producing a three-dimensional fibrous preform for manufacturing an annular part of a carbon-carbon composite material

(30) Priorité: 26.11.2010 FR 1059782
(43) Date de publication de la demande: 30.05.2012
(73) Titulaire: Messier-Bugatti-Dowty, 78140 Velizy Villacoublay (FR)
(72) Inventeur: Delecroix, Vincent, 69390 VERNAISON (FR); Chang, Kenny, UNION, KY Kentucky 41091 (US)
(74) Mandataire: Boura, Olivier

(56) Documents cités:
- FR-A1- 2 711 645
- FR-A1- 2 824 086

## Description

La présente invention concerne la réalisation d'une préforme fibreuse tridimensionnelle.

Un domaine particulier d'application de l'invention est la réalisation de préformes fibreuses tridimensionnelles destinées à la fabrication de pièces annulaires en matériau composite carbone-carbone (C-C), en particulier la fabrication de disques de frein.

Des disques de frein en matériau composite, en particulier en matériau composite à renfort en fibres de carbone et matrice carbone (composites carbone/carbone) sont bien connus. Leur fabrication comprend la réalisation d'une préforme fibreuse annulaire et la densification de celle-ci par une matrice.

La préforme fibreuse est habituellement réalisée par empilement de couches ou strates d'une nappe fibreuse et liaison de ces couches entre elles, typiquement par aiguilletage. La nappe fibreuse peut être linéaire, auquel cas la forme annulaire de la préforme est obtenue par découpe d'un disque dans le bloc ainsi formé de couches empilées de la nappe fibreuse. Alternativement, la nappe fibreuse peut être hélicoïdale auquel cas la forme annulaire de la préforme est obtenue directement par empilement et aiguilletage des couches de la nappe fibreuse.

Quant à la densification de la préforme fibreuse annulaire ainsi obtenue, elle est généralement réalisée soit par voie gazeuse (infiltration chimique par phase vapeur ou CVI), soit par voie liquide (imprégnation par une résine précurseur de la matrice et pyrolyse de la résine).

Une autre méthode connue de densification à laquelle s'applique plus particulièrement l'invention est la caléfaction. Celle-ci consiste à placer la préforme fibreuse annulaire dans un réacteur entre deux inducteurs spirales, le réacteur étant rempli d'un précurseur de carbone liquide à température ambiante de sorte à complètement immerger l'ensemble préforme/inducteurs. La préforme est alors chauffée par couplage électromagnétique jusqu'à ce que sa température interne atteigne approximativement 1000°C, provoquant ainsi le craquage du précurseur en son sein et consécutivement le dépôt de la matrice de carbone.

L'intérêt de la densification par caléfaction par rapport à une densification par CVI classiquement utilisée dans la fabrication de disques de frein tient à sa grande vitesse de densification (environ 100 fois plus rapide qu'une densification par voie gazeuse). Cette cinétique est rendue possible par l'établissement d'un important gradient thermique entre le coeur de la préforme et sa surface refroidie par le précurseur en ébullition. La densification est ainsi préférentielle à coeur du matériau et non pas en surface comme cela est le cas au cours d'une densification par CVI, ce qui autorise l'emploi de conditions de cinétique élevée.

Cette méthode particulière de densification est intiment liée aux caractéristiques de la préforme elle-même. En particulier, l'architecture du renfort fibreux, la nature des fibres utilisées, les défauts de la préforme, etc. ont une influence prépondérante sur le profil thermique généré pendant le couplage électromagnétique et donc sur la vitesse de densification de la préforme.

### Objet et résumé de l'invention

La présente invention a pour but principal de proposer un procédé de réalisation d'une préforme fibreuse permettant d'améliorer sa vitesse de densification par caléfaction.

Ce but est atteint grâce à un procédé de réalisation d'une préforme fibreuse au cours duquel, conformément à l'invention, il est prévu de modifier localement les propriétés électromagnétiques de la préforme fibreuse en augmentant le taux de fibres de certaines des couches de la nappe fibreuse.

L'augmentation locale du taux de fibres se fait sans changer la nature des fils ou câbles de carbone constituant la nappe fibreuse. Cette augmentation permet de favoriser le couplage électromagnétique auquel sera soumis la préforme dans une zone particulière de celle-ci. En choisissant judicieusement cette zone, il est alors possible d'accélérer la densification de la préforme par caléfaction.

De façon avantageuse, le taux de fibres est augmenté pour les couches de la nappe fibreuse situées à mi-épaisseur de la préforme fibreuse. En favorisant le couplage électromagnétique à mi-épaisseur de la préforme, le démarrage de la densification d'une telle préforme interviendra dans cette zone de la préforme et le front de densification n'aura que la moitié de l'épaisseur de la préforme à parcourir. Il en résulte des cycles de densification bien plus rapides.

Selon un mode de réalisation de l'invention, les couches de la nappe fibreuse dont le taux de fibres est augmenté sont soumises à un aiguilletage dont les paramètres sont différents de ceux de l'aiguilletage auquel sont soumises les autres couches.

Ainsi, les couches de la nappe fibreuse dont le taux de fibres est augmenté peuvent être soumises à un aiguilletage avec une densité d'aiguilletage supérieure à celle de l'aiguilletage auquel sont soumises les autres couches. Par exemple, ces couches peuvent être soumises à un aiguilletage avec une densité d'aiguilletage de l'ordre de 60 coups/cm², les autres couches étant soumises à un aiguilletage avec une densité d'aiguilletage de l'ordre de 30 coups/cm².

Alternativement, les couches de la nappe fibreuse dont le taux de fibres est augmenté sont soumises à un aiguilletage avec une profondeur de pénétration des aiguilles supérieure à celle de l'aiguilletage auquel sont soumises les autres couches. Par exemple, ces couches peuvent être soumises à un aiguilletage avec une profondeur de pénétration des aiguilles comprise entre 14,5 mm et 15,5 mm, les autres couches étant soumises à un aiguilletage avec une profondeur de pénétration des aiguilles de l'ordre de 12,5 mm.

Selon un autre mode de réalisation de l'invention, les couches de la nappe fibreuse dont le taux de fibres est augmenté présentent un grammage supérieur à celui des autres couches. Par exemple, ces couches peuvent présenter un grammage de l'ordre de 1100 g/m², les autres couches présentant un grammage de l'ordre de 700 g/m².

### Description détaillée de modes de réalisation

L'invention concerne la réalisation de préformes fibreuses tridimensionnelles destinées notamment, mais non exclusivement, à la fabrication de disques de frein en matériau composite carbone-carbone (C-C).

La fabrication de disques de frein en matériau composite, en particulier en matériau composite à renfort en fibres de carbone et matrice carbone (composites carbone/carbone) comprend la réalisation d'une préforme fibreuse annulaire à partir de nappes fibreuses formées chacune de fils ou câbles de carbone et la densification de cette préforme fibreuse annulaire par une matrice.

Lorsque la densification est réalisée par caléfaction, la préforme fibreuse annulaire est placée, de façon connue en soi, dans un réacteur entre deux inducteurs spirales. Le réacteur est alors rempli d'un précurseur de carbone liquide à température ambiante de sorte à complètement immerger l'ensemble préforme/inducteurs.

La préforme étant formée de fils ou câbles électriquement conducteurs, elle peut être chauffée directement par couplage électromagnétique jusqu'à ce que sa température interne atteigne approximativement 1000°C, provoquant ainsi le craquage du précurseur en son sein et consécutivement le dépôt de la matrice de carbone.

Afin d'accélérer le processus de caléfaction, l'invention vise à favoriser au cours de cette opération le couplage électromagnétique dans une zone particulière de la préforme fibreuse.

A cet effet, l'invention prévoit de modifier localement les propriétés électromagnétiques de la préforme fibreuse en augmentant le taux de fibres - et donc la conductivité électrique - de certaines des nappes formant la préforme fibreuse.

Idéalement, la préforme fibreuse étant de forme annulaire, l'augmentation locale du taux de fibres concernera les nappes situées à mi-épaisseur de la préforme.

Deux exemples particuliers de réalisation de préformes fibreuses conformément à l'invention seront maintenant décrits. Quelque soit l'exemple de réalisation, il est à noter que l'augmentation locale du taux de fibres de certaines nappes de la préforme fibreuse selon l'invention est réalisée sans changer la nature des fils ou câbles de la nappe fibreuse.

### Exemple 1 : Réalisation d'une préforme fibreuse à partir d'une nappe linéaire avec modification des paramètres d'aiguilletage

Dans cet exemple, la préforme fibreuse est réalisée à partir d'une nappe linéaire bidimensionnelle formée de fils ou câbles de carbone, par exemple de câbles de filaments en polyacrylonitrile (PAN) oxydé. Des couches ou strates de cette nappe linéaire sont empilées les unes sur les autres sur une table d'aiguilletage et aiguilletées une à une au fur à mesure de leur superposition pour former un bloc. Des préformes fibreuses annulaires sont ensuite découpées dans ce bloc.

La table d'aiguilletage utilisée au cours de la réalisation de la préforme fibreuse est bien connue en soi et ne sera donc pas décrit ici en détails. Brièvement, cette table comprend un plateau horizontal sur lequel est déposée la nappe linéaire, des moyens d'entraînement de la nappe sur le plateau, et une tête d'aiguilletage entraînée en mouvement vertical relatif par rapport au plateau.

La tête d'aiguilletage porte des aiguilles qui sont munies de barbes, crochets ou fourches pour prélever des fibres dans les couches empilées de la préforme et les transférer à travers celles-ci lorsqu'elles pénètrent dans la préforme. Par ailleurs, à chaque aiguilletage d'une nouvelle couche, le plateau de la table d'aiguilletage est déplacé verticalement, par l'intermédiaire de moyens moteur adéquats, d'un pas de descente déterminé correspondant à l'épaisseur d'une couche aiguilletée.

Les paramètres d'aiguilletage que l'on peut modifier avec une telle table sont notamment la densité d'aiguilletage, à savoir le nombre de coups par cm² reçus par la couche à aiguilleter lorsqu'elle passe sous la tête d'aiguilletage, et la profondeur de pénétration des aiguilles dans la préforme.

Dans cet exemple de réalisation, la préforme fibreuse est formée par empilement de 21 couches d'une nappe linéaire elle-même formée de câbles de filaments en PAN oxydé.

Deux premières couches de la nappe linéaire sont superposées puis aiguilletées entre elles avec une densité d'aiguilletage de 30 coups/cm² et une pénétration des aiguilles de l'ordre de 12,5mm.

Les sept couches suivantes sont empilées et aiguilletées une par une avec la même densité d'aiguilletage (à savoir 30 coups/cm²) en effectuant une descente du plateau de la table de manière à assurer une profondeur de pénétration des aiguilles constante, à savoir de l'ordre de 12,5mm.

Les trois couches suivantes (à savoir la 10^{ème}, la 11^{ème} et la 12^{ème}) sont superposées sur les neuf premières et aiguilletées une par une avec une densité d'aiguilletage supérieure à celle avec laquelle les neuf première couches ont été aiguilletées afin d'augmenter le taux de fibres de ces couches.

Par exemple, on choisira une densité d'aiguilletage de 60 coups/cm², la descente du plateau de la table d'aiguilletage étant programmée de manière à assurer une profondeur de pénétration des aiguilles restant identique à 12,5mm.

On comprend aisément qu'augmenter le nombre de coups par cm² reçus par les trois couches situées à mi-épaisseur lorsqu'elles passent sous la tête d'aiguilletage fait mécaniquement augmenter le nombre de passages d'aiguilles au travers de ces couches, et donc le nombre de fibres transférées depuis les couches sous-jacentes jusqu'à ces trois couches particulières. Il en résulte une augmentation de leur taux de fibres.

Enfin, les neuf couches suivantes sont empilées sur les douze première couches et aiguilletées une par une avec la même densité d'aiguilletage et la même profondeur de pénétration des aiguilles que pour les neuf premières couches.

Selon une variante de cet exemple de réalisation, la densité d'aiguilletage reste identique pour l'ensemble des 21 couches de la nappe linéaire, les trois couches situées à mi-épaisseur de la préforme (à savoir la 10^{ème} , la 11^{ème} et la 12^{ème}) étant soumises à un aiguilletage avec une profondeur de pénétration des aiguilles supérieure à celle de l'aiguilletage auquel sont soumises les autres couches.

Par exemple, on choisira une profondeur de pénétration des aiguilles comprise entre 14,5 mm et 15,5 mm pour ces trois couches dont on cherche à augmenter le taux de fibres, les autres couches étant soumises à un aiguilletage avec une profondeur de pénétration des aiguilles de l'ordre de 12,5 mm.

Dans cette variante, pour les trois couches situées à mi-épaisseur de la préforme, les aiguilles de la table d'aiguilletage pénètrent plus profondément dans la préforme lorsque celle-ci passe sous la tête d'aiguilletage. Un plus grand nombre de fibres sont donc transférées depuis les couches sous-jacentes jusqu'à ces trois couches particulières. Il en résulte une augmentation de leur taux de fibres.

De la sorte, les trois couches situées à mi-épaisseur de la préforme fibreuse ainsi formée présentent des taux de fibres supérieurs à celles des neuf premières couches et des neuf dernières couches de la préforme, cette augmentation du taux de fibres étant obtenue sans changer la nature des câbles de carbone formant la nappe fibreuse linéaire.

Des préformes fibreuses annulaires sont ensuite découpées dans la plaque ainsi obtenue puis placées dans un réacteur de caléfaction entre deux inducteurs spirales comme décrit précédemment. Chaque préforme fibreuse annulaires ayant un taux de fibres plus élevé à mi-épaisseur, le couplage électromagnétique lors de l'opération de caléfaction sera favorisé dans cette zone. La densification de la préforme démarrera ainsi dans cette zone à mi-épaisseur et le front de densification n'aura que la moitié de l'épaisseur de la préforme à parcourir. Il en résultera en une accélération de la densification globale de la préforme.

### Exemple 2 : Réalisation d'une préforme fibreuse à partir d'une nappe hélicoïdale avec modification du grammage de la nappe

Dans cet exemple de réalisation, la préforme fibreuse annulaire est réalisée à partir de nappes hélicoïdales bidimensionnelles formées chacune de fils ou câbles de carbone, par exemple de câbles de filaments en polyacrylonitrile (PAN) oxydé. La réalisation de telles nappes hélicoïdales est bien connue en soi et n'est donc pas décrite ici.

Des couches ou strates de ces nappes hélicoïdales sont empilées les unes sur les autres sur une table d'aiguilletage circulaire et aiguilletées une à une au fur à mesure de leur superposition pour former directement une préforme annulaire.

La table d'aiguilletage circulaire utilisée dans cet exemple de réalisation est sensiblement identique dans son fonctionnement à celle succinctement décrite précédemment et ne sera donc pas détaillée. Si besoin, on pourra se référer au document WO 02/088451 qui en décrit un exemple de réalisation.

Dans un premier temps, deux types de nappe hélicoïdale ayant des grammages différents sont formés. Par exemple, l'une de ces nappes possède un grammage de 700g/m² et l'autre un grammage de 1100 g/m². La nappe dont le grammage est de 1100g/m² peut être obtenue en augmentant au cours de la fabrication de la nappe la quantité de câbles de carbone s'étendant dans une direction, par exemple dans la direction circonférentielle. Cette nappe présente alors un taux de fibres supérieur à celle dont le grammage est de 700g/m².

Neuf couches de la nappe à 700g/m² sont d'abord empilées et aiguilletées une par une avec la même densité d'aiguilletage en effectuant une descente du plateau de la table de manière à assurer une profondeur de pénétration des aiguilles constante. Par exemple, on choisira une densité d'aiguilletage de 45 coups/cm² et une profondeur de pénétration des aiguilles de l'ordre de 12mm.

La nappe à 700g/m² est ensuite remplacée par la nappe à 1100g/m². Trois couches de cette nappe hélicoïdale (à savoir la 10^{ème}, la 11^{ème} et la 12^{ème} de la préforme) sont alors superposées sur les neuf premières couches et aiguilletées une par une avec les mêmes paramètres d'aiguilletage (densité d'aiguilletage de 45 coups/cm² et profondeur de pénétration des aiguilles de 12mm) pour constituer les couches centrales de la préforme.

La nappe à 700g/m² est alors à nouveau positionnée sur la table d'aiguilletage et neuf nouvelles couches de cette nappe sont superposées sur les autres couches et aiguilletées une par une avec toujours les mêmes paramètres d'aiguilletage.

De la sorte, les trois couches situées à mi-épaisseur de la préforme fibreuse ainsi formée présentent des taux de fibres supérieurs à celles des neuf premières couches et des neuf dernières couches de la préforme, cette augmentation du taux de fibres étant obtenue sans changer la nature des câbles formant la nappe linéaire.

La préforme fibreuse annulaire ainsi obtenue est alors placée dans un réacteur de caléfaction entre deux inducteurs spirales comme décrit précédemment. Cette préforme ayant un taux de fibres plus élevé à mi-épaisseur, le couplage électromagnétique lors de l'opération de caléfaction sera favorisé dans cette zone. La densification de la préforme démarrera ainsi dans cette zone à mi-épaisseur et le front de densification n'aura que la moitié de l'épaisseur de la préforme à parcourir. Il en résultera en une accélération de la densification globale de la préforme.

Alternativement, la même nappe à 700g/m² pourra être utilisée pour réaliser l'ensemble des 21 couches de la préforme fibreuse, des câbles supplémentaires de même nature étant alors incorporés au moment de l'aiguilletage des 10^{ème}, 11^{ème} et 12^{ème} couches afin d'augmenter le grammage de ces couches.

Par exemple, dans le cas d'une nappe constituée de 7 câbles circonférentiels (dits 0°) et de 10 câbles transversaux (dits 60°), cette nappe ayant une largeur de 10 cm et un grammage de 700 g/m², on pourra incorporer 5 câbles supplémentaires en 0° au moment de l'aiguilletage des 10^{ème}, 11^{ème} et 12^{ème} couches. En prenant des câbles de même nature que ceux formant la nappe et ayant une masse linéique de 3,8g/m, on augmente ainsi de 190g/m² le grammage des 10^{ème}, 11^{ème} et 12^{ème} couches de la préforme obtenue.

En pratique, les câbles supplémentaires en 0° qui sont incorporés sont d'abord fixés sur la nappe au moment de l'aiguilletage de la 10^{ème} couche (par aiguilletage, collage ou soufflage par exemple). Les 10^{ème}, 11^{ème} et 12^{ème} couches sont alors aiguilletées avec ces câbles supplémentaires puis ces derniers sont coupés après l'aiguilletage de la 12^{ème}couche.

## Revendications

1. Procédé de réalisation d'une préforme fibreuse tridimensionnelle pour la fabrication d'une pièce annulaire en matériau composite carbone-carbone, consistant à empiler des couches d'une nappe fibreuse formée de fils ou câbles de carbone et à aiguilleter une à une les couches au fur à mesure de leur superposition pour les lier entre elles, **caractérisé en ce qu'**il consiste en outre à modifier localement les propriétés électromagnétiques de la préforme fibreuse en augmentant le taux de fibres des couches de la nappe fibreuse situées à mi-épaisseur de la préforme fibreuse.

2. Procédé selon la revendication 1, dans lequel les couches de la nappe fibreuse dont le taux de fibres est augmenté sont soumises à un aiguilletage dont les paramètres sont différents de ceux de l'aiguilletage auquel sont soumises les autres couches.

3. Procédé selon la revendication 2, dans lequel les couches de la nappe fibreuse dont le taux de fibres est augmenté sont soumises à un aiguilletage avec une densité d'aiguilletage supérieure à celle de l'aiguilletage auquel sont soumises les autres couches.

4. Procédé selon la revendication 3, dans lequel les couches de la nappe fibreuse dont le taux de fibres est augmenté sont soumises à un aiguilletage avec une densité d'aiguilletage de l'ordre de 60 coups/cm², les autres couches étant soumises à un aiguilletage avec une densité d'aiguilletage de l'ordre de 30 coups/cm².

5. Procédé selon la revendication 2, dans lequel les couches de la nappe fibreuse dont le taux de fibres est augmenté sont soumises à un aiguilletage avec une profondeur de pénétration des aiguilles supérieure à celle de l'aiguilletage auquel sont soumises les autres couches.

6. Procédé selon la revendication 5, dans lequel les couches de la nappe fibreuse dont le taux de fibres est augmenté sont soumises à un aiguilletage avec une profondeur de pénétration des aiguilles comprise entre 14,5 mm et 15,5 mm, les autres couches étant soumises à un aiguilletage avec une profondeur de pénétration des aiguilles de l'ordre de 12,5 mm.

7. Procédé selon la revendication 1, dans lequel les couches de la nappe fibreuse dont le taux de fibres est augmenté présentent un grammage supérieur à celui des autres couches.

8. Procédé selon la revendication 7, dans lequel les couches de la nappe fibreuse dont le taux de fibres est augmenté présentent un grammage de l'ordre de 1100 g/m², les autres couches présentant un grammage de l'ordre de 700 g/m².

## Claims

1. A method of making a three-dimensional fiber preform for fabricating an annular part out of carbon-carbon composite material, the method consisting in stacking layers of a fiber sheet made up of carbon yarns or tows and in needling the layers one by one as they are superposed so as to bond them together, **characterized in that** it further consists in locally modifying the electromagnetic properties of the fiber preform by increasing the fiber density of the layers of the fiber sheet that are situated at half-thickness of the fiber preform.

2. A method according to claim 1, wherein the layers of the fiber sheet in which the fiber density is increased are subjected to needling with parameters that are different from those of the needling to which the other layers are subjected.

3. A method according to claim 2, wherein the layers of the fiber sheet in which the fiber density is increased are subjected to needling with needling density greater than that of the needling to which the other layers are subjected.

4. A method according to claim 3, wherein the layers of the fiber sheet in which the fiber density is increased are subjected to needling with a needling density of about 60 strokes/cm², the other layers being subjected to needling with a needling density of about 30 strokes/cm².

5. A method according to claim 2, wherein the layers of the fiber sheet in which the fiber density is increased are subjected to needling with the needles having a penetration depth greater than that of the needling to which the other layers are subjected.

6. A method according to claim 5, wherein the layers of the fiber sheet in which the fiber density is increased are subjected to needling with a penetration depth for the needles lying in the range 14.5 mm to 15.5 mm, the other layers being subjected to needling with a penetration depth for the needles of about 12.5 mm.

7. A method according to claim 1, wherein the layers of the fiber sheet in which the fiber density is increased presents a weight that is greater than that of the other layers.

8. A method according to claim 7, wherein the layers of the fiber sheet in which the fiber density is increased present weight of about 1100 g/m² and the other layers present weight of about 700 g/m².

## Patentansprüche

1. Verfahren zur Herstellung eines dreidimensionalen Faservorformlings für die Fertigung eines ringförmigen Teils aus Kohlenstoff/Kohlenstoff-Verbundwerkstoff, das darin besteht, Schichten einer von Kohlenstoffäden oder -seilen gebildeten Faserlage aufeinanderzulegen und die Schichten mit zunehmender Aufschichtung nacheinander zu vernadeln, um sie untereinander zu verbinden, **dadurch gekennzeichnet, daß** es ferner darin besteht, die elektromagnetischen Eigenschaften des Faservorformlings dadurch lokal zu verändern, daß der Fasergehalt der Schichten der Faserlage, die sich auf halber Dicke des Faservorformlings befinden, erhöht wird.

2. Verfahren nach Anspruch 1, wobei die Schichten der Faserlage, deren Fasergehalt erhöht ist, einem Nadeln unterzogen werden, dessen Parameter von denjenigen des Nadelns, dem die anderen Schichten unterzogen werden, verschieden sind.

3. Verfahren nach Anspruch 2, wobei die Schichten der Faserlage, deren Fasergehalt erhöht ist, einem Nadeln unterzogen werden, das eine größere Nadelungsdichte als das Nadeln, dem die anderen Schichten unterzogen werden, aufweist.

4. Verfahren nach Anspruch 3, wobei die Schichten der Faserlage, deren Fasergehalt erhöht ist, einem Nadeln mit einer Nadelungsdichte in der Größenordnung von 60 Stichen/cm² unterzogen werden, wobei die anderen Schichten einem Nadeln mit einer Nadelungsdichte in der Größenordnung von 30 Stichen/cm² unterzogen werden.

5. Verfahren nach Anspruch 2, wobei die Schichten der Faserlage, deren Fasergehalt erhöht ist, einem Nadeln unterzogen werden, das eine größere Eindringtiefe der Nadeln als das Nadeln, dem die anderen Schichten unterzogen werden, aufweist.

6. Verfahren nach Anspruch 5, wobei die Schichten der Faserlage, deren Fasergehalt erhöht ist, einem Nadeln mit einer Eindringtiefe der Nadeln im Bereich zwischen 14,5 mm und 15,5 mm unterzogen werden, wobei die anderen Schichten einem Nadeln mit einer Eindringtiefe der Nadeln in der Größenordnung von 12,5 mm unterzogen werden.

7. Verfahren nach Anspruch 1, wobei die Schichten der Faserlage, deren Fasergehalt erhöht ist, ein größeres Flächengewicht als die anderen Schichten aufweisen.

8. Verfahren nach Anspruch 7, wobei die Schichten der Faserlage, deren Fasergehalt erhöht ist, ein Flächengewicht in der Größenordnung von 1100 g/m² aufweisen, wobei die anderen Schichten ein Flächengewicht in der Größenordnung von 700 g/m² aufweisen.
